(19) Europäisches Patentamt / European Patent Office / Office européen des brevets

(11) **EP 1 756 449 B1**

(12) **EUROPEAN PATENT SPECIFICATION**

(45) Date of publication and mention
of the grant of the patent:
**08.12.2010 Bulletin 2010/49**

(51) Int Cl.:
**F16H 7/02** (2006.01)

(21) Application number: **05759207.3**

(22) Date of filing: **12.05.2005**

(86) International application number:
**PCT/EP2005/005111**

(87) International publication number:
**WO 2005/119088 (15.12.2005 Gazette 2005/50)**

(54) **TRACTION MECHANISM FOR AN INTERNAL COMBUSTION ENGINE**

ZUGMITTELTRIEB FÜR EINE BRENNKRAFTMASCHINE

MECANISME DE TRACTION POUR MOTEUR A COMBUSTION INTERNE

(84) Designated Contracting States:
**AT DE FR HU IT**

(30) Priority: **03.06.2004 DE 102004027064**
**29.07.2004 US 592225 P**

(43) Date of publication of application:
**28.02.2007 Bulletin 2007/09**

(60) Divisional application:
**10169655.7**
**10188147.2**

(73) Proprietor: **Schaeffler Technologies GmbH & Co. KG**
**91074 Herzogenaurach (DE)**

(72) Inventors:
• **PFLUG, Rainer**
**91560 Heilsbronn (DE)**
• **ASSEL, Martin**
**91593 Burgbernheim (DE)**

(56) References cited:
WO-A-03/046413      DE-A1- 19 520 508
DE-A1- 19 812 939      FR-A- 2 824 599

• PATENT ABSTRACTS OF JAPAN vol. 016, no. 122 (M-1226), 27 March 1992 (1992-03-27) & JP 03 288047 A (HONDA MOTOR CO LTD), 18 December 1991 (1991-12-18)
• PATENT ABSTRACTS OF JAPAN vol. 012, no. 347 (M-743), 19 September 1988 (1988-09-19) -& JP 63 106453 A (NIPPON SOKEN INC), 11 May 1988 (1988-05-11)
• PATENT ABSTRACTS OF JAPAN vol. 012, no. 321 (M-736), 31 August 1988 (1988-08-31) -& JP 63 088368 A (MITSUBISHI MOTORS CORP), 19 April 1988 (1988-04-19)
• PATENT ABSTRACTS OF JAPAN vol. 012, no. 137 (M-690), 26 April 1988 (1988-04-26) -& JP 62 258109 A (KOYO SEIKO CO LTD), 10 November 1987 (1987-11-10)
• PATENT ABSTRACTS OF JAPAN vol. 018, no. 212 (M-1593), 15 April 1994 (1994-04-15) -& JP 06 010693 A (MAZDA MOTOR CORP), 18 January 1994 (1994-01-18)
• PATENT ABSTRACTS OF JAPAN vol. 016, no. 122 (M-1226), 27 March 1992 (1992-03-27) & JP 03 288046 A (HONDA MOTOR CO LTD), 18 December 1991 (1991-12-18)

**Description**

**Field of the invention**

The present invention relates to a traction mechanism which is intended for driving at least one camshaft or at least one assembly of an internal combustion engine. The traction mechanism comprises, as a traction device, an endless belt which connects a driven wheel and at least one driving wheel, the traction device being prestressed by a tensioning device.

**Background of the invention**

DE 43 40 865 A1 discloses a tensioning device for a traction mechanism comprising a setting eccentric which is fixed in the operating state. A working eccentric adjustable by means of a torsion spring and surrounding the setting eccentric is connected to a rolling bearing on which a tensioning roller is arranged rotatably. In the installed state, the tensioning roller is supported on a traction device of the traction mechanism and automatically ensures a sufficient prestressing of the traction device. Furthermore, the tensioning device allows independent readjustment, length compensation, due to aging of the traction device.

A traction mechanism, designated as a control drive, of an internal combustion engine is illustrated and described in DE 34 34 428 A1. The control drive is intended for driving a camshaft of the internal combustion engine and includes a toothed belt which rotates in an oil bath. This known traction mechanism provides a spatially narrow relationship between the driving wheels and the driven wheel assigned to the crankshaft of the internal combustion engine. The traction device in this case has no tensioning device.

The patent US 6,000,373 A1 discloses a further control drive for an internal combustion engine, in which the traction device connects a driven wheel assigned to the crankshaft to a driving wheel of the camshaft. Furthermore, this traction mechanism is intended for driving the lubricating oil pump immersed in an oil bath. A toothed belt toothed on both sides serves as a traction device, the internal toothing cooperating with the driven wheel of the crankshaft and the driving wheel of the camshaft and its external toothing cooperating with the toothing of the driving wheel of the oil pump.

JP 3288047 A discloses a traction mechanism with the features of the preamble of claim 1.

**Summary of the invention**

In light of the known traction mechanisms for internal combustion engines, the object of the present invention is to design traction mechanisms of this type in such a way that they ensure an increased useful life, in particular, of the traction device.

This set problem is solved by means of the features of claim 1. The traction mechanism according to the invention includes at least one belt pulley of nonround configuration or at least one toothed belt pulley of nonround configuration of the driven wheel or of the driving wheel. This measure damps, prevents or compensates vibrations which are introduced into the traction mechanism owing to the rotational nonuniformity of the internal combustion engine. At the same time, the traction mechanism according to the invention has a positive effect on the generation of noise.

By means of the nonround belt pulley or toothed belt pulley, preferably assigned to the crankshaft of the internal combustion engine, a stabilized traction mechanism with markedly reduced dynamics is obtained, with the result that the force peaks, the peak load and the traction device, advantageously decrease. On account of this, individual components of the traction mechanism, in particular the width of the traction device, can advantageously be simplified, with the result that the weight, installation space and costs of the traction mechanism are reduced.

The reduced prestressing force of the traction device advantageously has a direct influence on the work of friction between the internal toothing of the toothed belt and the external toothing of the belt pulley, that is to say the tooth flanks of the toothed belt and of the belt pulley, during the run-in action and the run-out action. The decreased prestressing force occurring in the case of the vibration-damped traction mechanism decisively reduces the work of friction, this having an advantageous effect on the wear of the traction device. At the same time, the decreased work of friction reduces the risk of tooth jump which, in the control drive of the internal combustion engine, triggers adverse consequential damage and often leads to a complete failure of the internal combustion engine.

According to a further aspect of the invention, the entire traction mechanism is arranged in an encased or closed installation space, the traction device being exposed to an oil mist. What is suitable for this purpose is, for example, a connection, an orifice, between the crankcase of the internal combustion engine and the installation space of the traction mechanism, with the result that an exchange of an oil mist between the crankcase of the internal combustion engine and the installation space of the traction mechanism always takes place.

The nonround belt pulley or toothed belt pulley of the traction mechanism is preferably assigned to the crankshaft of the internal combustion engine. Furthermore, the vibration-damped traction mechanism according to the invention makes it possible to use a cost-optimized tensioning system. What is suitable for this purpose is preferably a tensioning device with only one working eccentric or, alternatively, a tension-rail tensioning device. Furthermore, the traction mechanism according to the invention can, for example, be combined with a friction-disk tensioning device or a cone-type tensioner.

Owing to the combination of the features according to the invention, a cost-optimized traction mechanism can be implemented, along with an increased useful life of the traction device. It is possible, without an exchange of the traction device, to achieve a running capacity, a vehicle travel, of markedly > 200,000 km. The concept according to the invention of the traction mechanism is preferably suitable for diesel internal combustion engines with high specific power, for example for what are known as pump/nozzle internal combustion engines, for which a chain mechanism is ruled out because of insufficient elasticity.

Further advantageous embodiments are the subject matter of the dependent claims 2 to 18.

According to a preferred object-compatible solution to the set problem for this invention, a belt pulley or toothed belt pulley which is configured as an ellipse is used. The ellipse is preferably configured such that the largest axis "a" is designed in a ratio of ≥ 1.01:1 with respect to the smallest axis "b". The axis ratio of 1.03:1. determined empirically by tests, furnished, with conventional internal combustion engines used in passenger cars, an optimum result for achieving a vibration-damped traction mechanism. An axis ratio "a":"b" of the ellipse of 1.1:1 is defined as the upper limit.

Alternatively, the invention provides a belt pulley or toothed belt pulley of polygon-like design for the driving wheel or the driven wheel. Moreover, the invention includes designing the nonround belt pulley or toothed belt pulley as a symmetrical or asymmetrical polygon with rounded transitions, for example in the form of a double ellipse.

Regardless of the respective geometric design or configuration, the-profile of the belt pulley or toothed belt pulley is determined by means of a calculation in conjunction with a simulation and tests. The result of the vibration-damped traction mechanism according to the invention is that the fluctuation in the prestressing force in the fluctuation of the force peaks of the traction device configured as an endless belt is markedly reduced over the entire rotational speed spectrum in the operating state of the internal combustion engine. At the same time, the risk of adverse resonance is reduced. Proceeding from an average value of the traction device force, fluctuation of the force peaks in the traction device can advantageously be restricted to a value of ≤ 50% by means of the measures according to the invention.

According to the invention, the prestressing force of the traction device is adapted to the dynamics of the vibration-damped traction mechanism. The measures according to the invention make it possible to reduce the prestressing force by ≥ 15%, as compared with conventional traction mechanisms, with the boundary conditions being the same, that is to say with the internal combustion engine being the same, and with an identical torque. Advantageously, therefore, the useful life of the traction device and also that of the rolling bearings for the belt pulleys or toothed belt pulleys of all the assemblies connected to the traction mechanism can be increased.

As a result of the vibration-damped traction mechanism according to the invention, the peak load in the traction device decreases. The traction device width "s" can thereby be designed to be narrower by ≥ 18%, as compared with conventional traction mechanisms. In addition to a reduced traction device width, the invention makes it possible to adapt the width of all the belt pulleys or toothed belt pulleys of the traction mechanism to the changed traction device width. Both measures advantageously reduce the required overall space of the traction mechanism. Furthermore, due to the traction device of narrower design and to the decreased prestressing force of the traction device applied by the tensioning system, simplified mounting is achieved. Alternatively, a reduced traction device width, an increased useful life on account of the reduced peak load can be achieved by means of a traction device having an unchanged width.

The reduction according to the invention of the belt width of ≥ 18% may be adopted, for example, for a conventional width design, according to the relation:

$$R_{b(\text{belt width})} = F_{h(\text{belt peak load})} / Z_{e(\text{number of meshing teeth})} / R_{i(\text{specific belt coefficient})}$$

Example calculation:

$F_h$ = 3000 N; $Z_e$ = 13.2;
$R_i$ = 6 N/mm /$Z_e$ $R_b$ = 3000/13.2/6
$R_b$ = 37.8 mm

The required belt width $R_b$ is: 38 mm.
Proceeding from this value, the belt width can be reduced by the value ≥ 18% by means of the measures according to the invention.

A belt or toothed belt of reduced width may advantageously be exchanged for a chain. The traction mechanism according to the invention consequently makes it possible to convert or exchange from a chain mechanism to a belt mechanism which, in particular, also has a weight and cost benefit in addition to an acoustic benefit, for generation of noise. Moreover, a toothed belt mechanism or belt mechanism according to the invention is suitable for overcoming large axial distances, for example between the driven wheel and the driving wheel.

The invention includes, as a tensioning device, a fixed component which is assigned a working eccentric acted upon by a spring means and connected to the tensioning roller. This tensioning device, of simple construction, is adapted to the dynamics of the traction mechanism according to the invention and is consequently adequate for implementing a sufficient prestressing force of the traction device in the operating state.

Alternatively to a simple eccentric tensioning device, according to the invention, the tensioning system used may be a tension rail which is pivotable via a rotary bearing and which, assisted by a means of force, bears nonpositively against the traction device.

As a measure for reducing the friction between the traction device and the tension rail, it is appropriate to provide a tension rail with two guide rollers which are spaced apart from one another and at which the traction device is guided. An alternative measure for optimizing the friction between the tension rail and the traction device is to provide the tension rail with orifices which improve a circulation of the oil or of the oil mist.

For weight optimization, it is appropriate, according to the invention, to configure the tension rail as a plastic injection molding. What is suitable for this purpose is a wear-resistant plastic having high rigidity or strength, for example Kevlar, or a plastic reinforced with glass fibers, such as PA66GF.

This tension rail is preferably assigned a tensioning system which includes a housing in which can be displaced a hydraulically damped piston which is acted upon by a spring means and which cooperates indirectly or directly with the tension rail. Alternatively to this, an electrically activatable means of force cooperating with the tension rail is suitable. Preferably, for this purpose, a ball screw can be used, the servomotor of which cooperates with a regulating or control unit. Such a means of force allows a variable prestressing of the traction device dependent on operating parameters or on definable operating cycles of the internal combustion engine.

According to a further embodiment of the invention, the installation space intended for the traction mechanism is partially filled with oil, and, in the operating state, the traction device is partially immersed in an oil bath or rotates in an oil bath. The sealed-off installation space intended for the traction mechanism preferably precedes an internal combustion engine on the end face of the latter.

According to the invention, a traction device produced from an oil-resistant material is provided for the traction mechanism, for which purpose an elastomeric material mass or a polyurethane is preferably suitable.

The design of the traction device produced as an endless belt makes it possible, on account of the decreased prestressing force, to reduce the number and/or arrangement of the reinforcements produced as pull cords, as compared with previous endless belts. In this case, the pull cords are preferably embedded in an HMBR rubber mixture. Furthermore, on the inside, the endless belt designed as a toothed belt has a polyamide fabric in the region of an inner profiling or inner toothing. Suitable pull cords are, in particular, pull cords made from high-purity glass or from carbon cord. These materials make it possible to reduce the number of pull cords, while at the same time high elasticity or bending strength remains ensured. Moreover, this reinforcement improves the deformation behavior and at the same time reduces intrinsic heating, with the result that a prolonged useful life of the traction device is obtained.

The traction mechanism according to the invention can be used both for the control drive for driving at least one camshaft and for the assembly drive, that is to say for driving individual assemblies, such as the alternator, water pump, steering aid pump or air conditioning compressor of the internal combustion engine.

Brief description of the drawings

Exemplary embodiments of the invention are illustrated in the figures in which:

figure 1     shows a traction mechanism according to the invention with a tensioning system comprising a tension rail, in a closed in- stallation space;

figure 2     shows a further traction mechanism according to the inven- tion with a tensioning system including a working eccentric;

figure 3     shows, as a drawing of an individual part, the toothed belt pulley designed to be nonround as an ellipse;

figure 4     shows the construction of a traction device according to the invention;

figure 5     shows a detail of the traction mechanism according to figure 2, which illustrates the tooth meshing between the traction device designed as a toothed belt and a toothed belt pulley;

figure 6      shows a sectional illustration of the tensioning system of the traction mechanism depicted in figure 2.

### Detailed description of the drawings

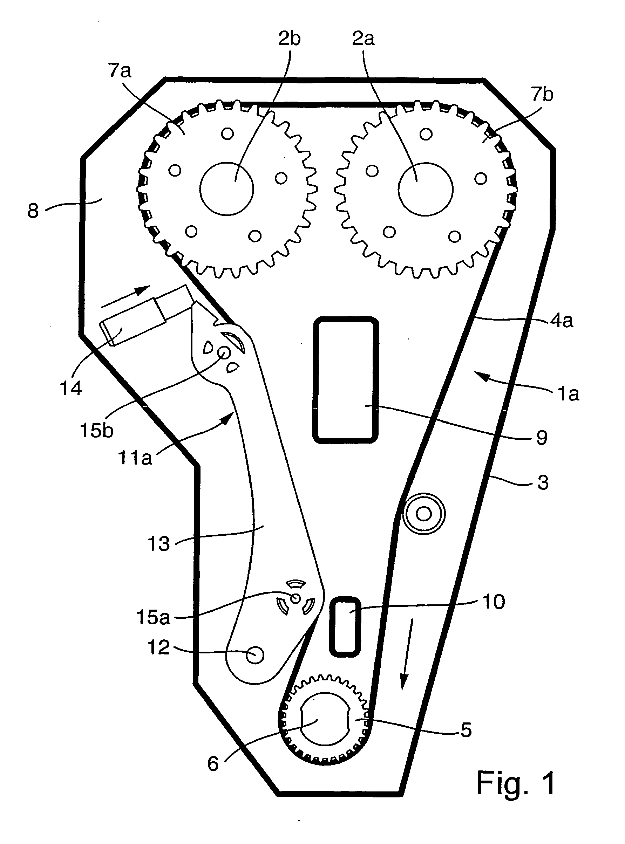

Figure 1 shows a traction mechanism 1a in an installed state, which is provided as a control drive for driving two camshafts of an internal combustion engine 3. A traction device 4a, designed as an endless belt, in this case connects a driven wheel 5 of nonround configuration, that is to say a toothed belt wheel connected directly to a crankshaft 6 of the internal combustion engine 3 and having two driving wheels 7a, 7b assigned to the camshafts 2a, 2b. The traction mechanism 1a, also to be designated as a control drive, is integrated in a closed installation space 8 preceding the internal combustion engine 3 and the end face of the latter. The installation space 8 is connected by means of orifices 9, 10 to a crank space of the internal combustion engine 3, thus ensuring an overflow of oil mist and/or of lubricating oil which, in particular, has a friction-reducing effect on the traction mechanism 1 a.

Furthermore, the traction mechanism 1a comprises a tensioning device 11a which comprises a tension rail 13 pivotable about an axis of rotation 12. At that end of the tension rail 13 which lies opposite the axis of rotation 12 is supported a means of force 14 which imparts to the tension rail 11a a continuous pulse of force acting clockwise, in order to achieve a sufficient prestressing of the traction device 4a. The tensioning device 11a is in this case assigned to the region of an idle side of the traction device 4a rotating clockwise.

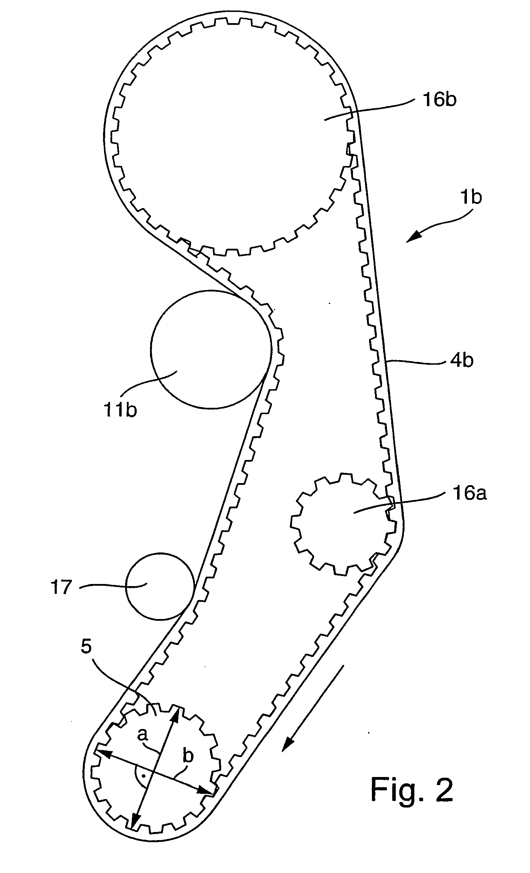

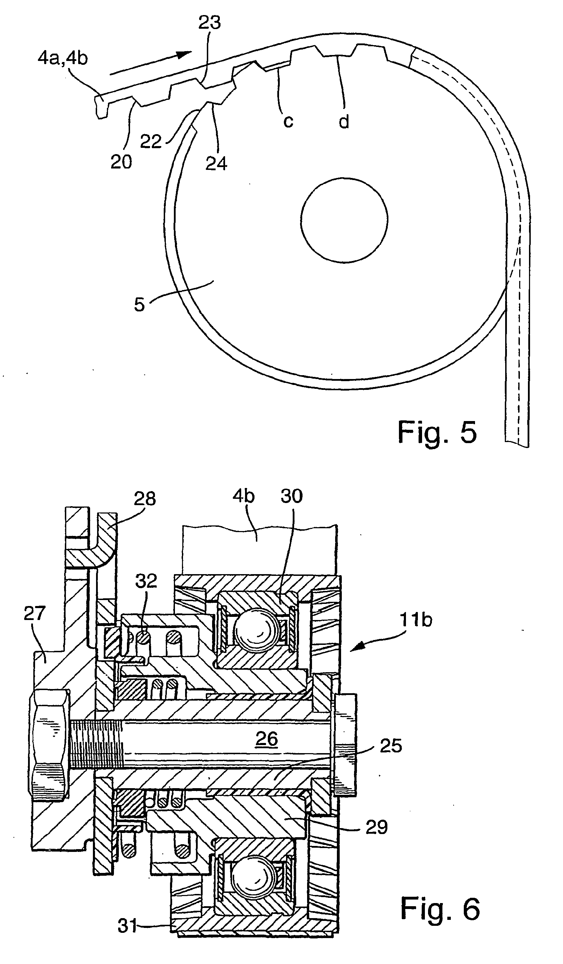

Figure 2 depicts the traction mechanism 1b, in which the driven wheel 5 is designed as an ellipse, with an axis "a", the length of which exceeds the axis "b". The traction mechanism 1b serves for driving assemblies of the internal combustion engine 3, such as a water pump and air conditioning compressor, the driving wheels 16a, 16b of which are surrounded at least partially by the traction device 4b. The tensioning device 11b, which includes a working eccentric, is supported on the idle side of the traction mechanism 1b rotating clockwise. Figure 6 illustrates the construction of the tensioning device 11b. The traction device 4b is guided at a deflecting roller 17 between the tensioning device 11a and the driven wheel 5.

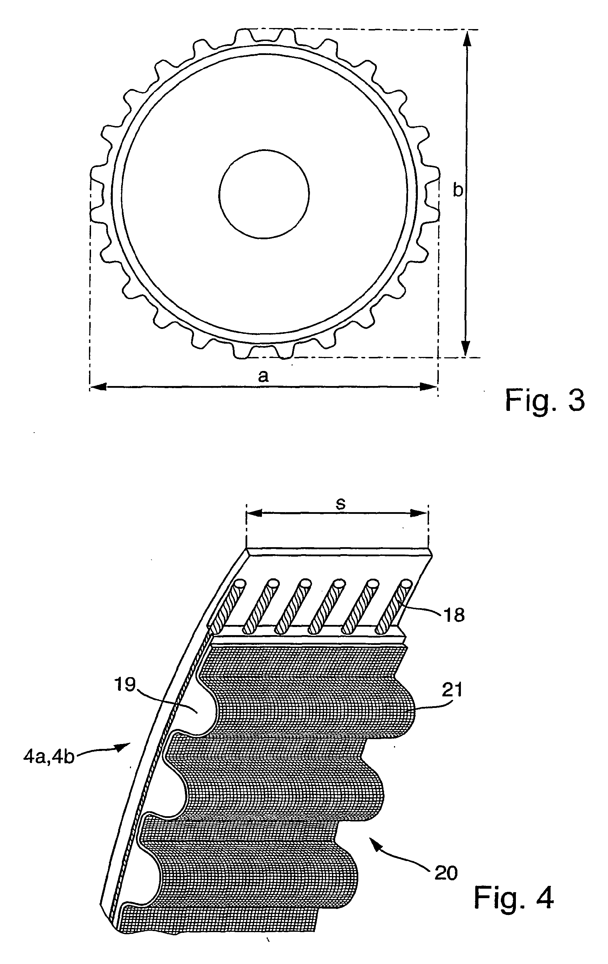

Figure 3 illustrates on an enlarged scale the driven wheel 5 which forms an ellipse. The outside diameter or longitudinal axis "a" in this case exceeds the dimension of the further longitudinal axis "b". This deliberate configuration of the driven wheel 5 determined by means of tests gives rise to a vibration-damped traction mechanism 1a, 1b, this having an advantageous effect on the design of further components of the traction mechanism 1a, 1b.

The construction of the traction device 1a, 1b according to the invention is shown in figure 4. Owing to the driven wheel 5 of nonround configuration and to the associated prestressing force of the traction device 4a, 4b, the width "s" of the traction device 4a, 4b can be reduced. Correspondingly to the width "s" of the traction device 4a, 4b, the traction mechanisms 1a, 1b comprise width-adapted toothed belt pulleys or belt pulleys. The construction of the traction device 4a, 4b provides continuous pull cords 18 which are arranged parallel and are embedded in an HNBR rubber mixture 19.

An internal toothing 20 of the traction device 4a, 4b has a polyamide fabric 21. In order to increase the tearing strength of the traction device 4a, 4b or to optimize further the width "s" of the traction device 4a, 4b there is a possibility of using pull cords 18 produced from high-purity glass or carbon cord.

An interaction, a run-in, of the traction device 4a, 4b with the driven wheel 5 of nonround configuration is illustrated in figure 5. Owing to the advantageous reduced prestressing force according to the invention of the traction device 4a, 4b, a work friction between the internal toothing 20 of the traction device 4a, 4b and an external toothing 22 of the driven wheel 5 decreases at the same time. The work friction arises during a sliding movement of a tooth flank 23 of the internal toothing with respect to the tooth flank 24 of the external toothing, between a first contact phase, which corresponds to the position "c", and the reaching of an end position in a position "d". Due to the reduced work friction in the contact zone between the traction device 4a, 4b and the driven wheel 5, designed as a toothed belt pulley, on account of the decreased prestressing force of the traction device 4a, 4b, a frictional heat decreases at the same time because of a reduced deformation of the traction device 4a, 4b. This results, overall, in a markedly prolonged useful life of the traction mechanism 1a, 1b.

The tensioning device 11b according to figure 2 is depicted in longitudinal section in figure 6. The tensioning device 11b, also to be designated as a simple eccentric, comprises a cylindrically designed carrying body 25 which is fastened fixedly, for example to a housing 27 of the internal combustion engine 3, by means of a screw connection 26. The carrying body 26 is inserted positively into a baseplate 28 which is supported on the housing 27 and is fixed in terms of rotation on the latter. Arranged rotatably on the carrying body 25 is a working eccentric 29 on which is positioned a rolling bearing 30 which is surrounded on the outside by a tensioning roller 31. In the installation state of the tensioning device 11b, a spring means 32 inserted between the baseplate 28 and the working eccentric 29 gives rise to a nonpositive bearing contact of the tensioning roller 31 against the traction device 4b.

### Reference numerals

| 1a | Traction mechanism |
| 1b | Traction mechanism |
| 2a | Camshaft |
| 2b | Camshaft |
| 3 | Internal combustion engine |
| 4a | Traction device |
| 4b | Traction device |
| 5 | Driven wheel |
| 6 | Crankshaft |
| 7a | Driving wheel |
| 7b | Driving wheel |
| 8 | Installation space |
| 9 | Orifice |
| 10 | Orifice |
| 11a | Tensioning device |
| 11b | Tensioning device |
| 12 | Axis of rotation |
| 13 | Tension rail |
| 14 | Means of force |
| 15a | Guide roller |
| 15b | Guide roller |
| 16a | Driving wheel |
| 16b | Driving wheel |
| 17 | Deflecting roller |
| 18 | Pull cord |
| 19 | Rubber mixture |
| 20 | Internal toothing |
| 21 | Polyamide fabric |
| 22 | External toothing |
| 23 | Tooth flank |
| 24 | Tooth flank |
| 25 | Carrying body |
| 26 | Screw connection |
| 27 | Housing |
| 28 | Baseplate |
| 29 | Working eccentric |
| 30 | Rolling bearing |
| 31 | Tensioning roller |
| 32 | Spring means |

**Claims**

1. A traction mechanism, which is intended for driving at least one camshaft or at least one assembly of an internal combustion engine (3), comprising a traction device (4a, 4b) which is designed as an endless belt and connects a driven wheel (5) and at least one driving wheel (7a, 7b, 16a, 16b) and which is prestressed by a tensioning device (11a, 11b), wherein the traction mechanism (1a, 1b)

    - is arranged in an encased or enclosed installation space (8), the traction device (4a, 4b) being exposed at least to an oil mist;
    - and includes the tensioning device (11a, 11b) which preferably includes a working eccentric (29) or a tension rail (13);

    **characterised in that** the traction mechanism (1a, 1b)

    - has at least one belt pulley of nonround configuration or one toothed belt pulley of nonround configuration of the driven wheel (5) or of the driving wheel (7a, 7b, 16a, 16b);
    - and for which traction mechanism (1a, 1b) a sealed-off installation space (8) preceding the internal combustion engine (3) on the end face of the latter is intended.

2. The traction mechanism as claimed in claim 1, the belt pulley or toothed belt pulley of nonround configuration of the driven wheel (5) or of the driving wheel (7a, 7b, 16a, 16b) being designed as an ellipse having a ratio of the axes "a" to "b" of ≥ 1.01:1.

3. The traction mechanism as claimed in claim 1, which has at least one belt pulley or toothed belt pulley having a symmetrically or asymmetrically polygonal form and designed to be rounded in transitional zones.

4. The traction mechanism as claimed in claim 1, a permissible fluctuation or force dispersion of an upper load and a lower load of a prestressing force of the traction device (4a, 4b) from an average value amounting to ≥ 50%.

5. The traction mechanism as claimed in claim 1, wherein the occurring peak load is lower by ≥ 15% in comparison with a conventional traction mechanism of an internal combustion engine, a width "s", adapted to the reduced peak load, of the traction device (4a, 4b) being designed to be narrower by ≥ 18% in comparison with previous traction devices.

6. The traction mechanism as claimed in claim 1, the tensioning device (11b) comprising a fixed component which is assigned a working eccentric (29) acted upon by a spring means (32) and connected to a tensioning roller (31).

7. The traction mechanism as claimed in claim 1, the tensioning device (11 a) including a tension rail which is pivotable via an axis of rotation (12) and which bears nonpositively against the traction device (4a) via a means of force (14).

8. The traction mechanism as claimed in claim 7, the tensioning device (11a) of which includes a tension rail (13) with two guide rollers (15a, 15b) which are spaced apart from one another and at which the traction device (4a) is guided.

9. The traction mechanism as claimed in claim 7, wherein the tension rail (13) of the tensioning device (11a) has orifices which allow a circulation of the oil mist, in particular in the region of the guide rollers (15a, 15b).

10. The traction mechanism as claimed in claim 1, the tensioning device (11a) of which comprises as a means of force (14) a housing, in which can be displaced a hydraulically damped piston which is acted upon by a spring means and which cooperates indirectly or directly with a tension rail (13).

11. The traction mechanism as claimed in claim 1, the installation space (8) intended for the traction mechanism (1a, 1b) being partially filled with oil, and, in the operating state, the traction device (4a, 4b) being partially immersed in an oil bath or rotating in an oil bath.

12. The traction mechanism as claimed in claim 1, with a traction device (4a, 4b) which is produced from an oil-resistant material, in particular an elastomeric material mass, or from polyurethane.

13. The traction mechanism as claimed in claim 1, the traction device, the width "s" of which is adapted to the peak force in the traction device (4a, 4b), including high-strength pull cords (18) as reinforcement.

14. The traction mechanism as claimed in claim 1, which is intended as a control drive for driving at least one camshaft of the internal combustion engine (3) and which has a toothed belt as a traction device (4a, 4b).

15. The traction mechanism as claimed in claim 1, which is provided for driving assemblies of the internal combustion engine, such as the alternator, water pump, steering aid pump or air conditioning compressor, or which is intended for driving an oil pump or balancing shafts of the internal combustion engine.

**Patentansprüche**

1. Zugmitteltrieb, der zum Antrieb von mindestens einer Nockenwelle oder mindestens einem Aggregat einer Brennkraftmaschine (3) bestimmt ist, umfassend eine als Endlosriemen ausgebildete Zugvorrichtung (4a, 4b), die ein Abtriebsrad (5) und mindestens ein Antriebsrad (7a, 7b, 16a, 16b) verbindet und die von einer Spannvorrichtung (11a, 11b) vorgespannt ist, wobei der Zugmitteltrieb (1a, 1b)

- in einem gekapselten bzw. geschlossenen Einbauraum (8) angeordnet ist, wobei die Zugvorrichtung (4a, 4b) mindestens einem Ölnebel ausgesetzt ist;
- und die Spannvorrichtung (11a, 11b) enthält, die vorzugsweise einen Arbeitsexzenter (29) oder eine Spannschiene (13) enthält;

**dadurch gekennzeichnet, dass** der Zugmitteltrieb (1a, 1b)

- mindestens eine unrund gestaltete Riemenscheibe oder eine unrund gestaltete Zahnriemenscheibe des Abtriebsrades (5) oder des Antriebsrades (7a, 7b, 16a, 16b) aufweist;
- und für den Zugmitteltrieb (1a, 1b) ein der Brennkraftmaschine (3) stirnseitig vorgelagerter, abgedichteter Einbauraum (8) bestimmt ist.

2. Zugmitteltrieb nach Anspruch 1, wobei die unrund gestaltete Riemenscheibe oder Zahnriemenscheibe des Abtriebsrades (5) oder des Antriebsrades (7a, 7b, 16a, 16b) als Ellipse mit einem Verhältnis der Achsen "a" zu "b" von ≥ 1,01:1 ausgeführt ist.

3. Zugmitteltrieb nach Anspruch 1, der mindestens eine symmetrisch oder asymmetrisch ausgebildete, polygonartig gestaltete Riemenscheibe oder Zahnriemenscheibe aufweist, die in Übergangszonen gerundet ausgeführt ist.

4. Zugmitteltrieb nach Anspruch 1, wobei eine zulässige Schwankung oder Kraftverteilung von einer Oberlast und einer Unterlast einer Vorspannkraft der Zugvorrichtung (4a, 4b) von einem Mittelwert bis zu ≥50% beträgt.

5. Zugmitteltrieb nach Anspruch 1, wobei die auftretende Spitzenlast im Vergleich zu einem herkömmlichen zugmitteltrieb einer Brennkraftmaschine um ≥15% geringer ist, wobei eine zur Reduzierung der Spitzenlast ausgelegte Breite "s" der Zugvorrichtung (4a, 4b) so ausgeführt ist, dass sie im Vergleich zu vorherigen Zugvorrichtungen um ≥18% schmaler ist.

6. Zugmitteltrieb nach Anspruch 1, wobei die Spannvorrichtung (11b) eine feste Komponente umfasst, die einem Arbeitsexzenter (29) zugeordnet ist, das von einem Federmittel (32) beaufschlagt wird und mit einer Spannrolle (31) verbunden ist.

7. Zugmitteltrieb nach Anspruch 1, wobei die Spannvorrichtung (11a) eine über eine Drehachse (12) schwenkbare Spannschiene enthält, die über ein Kraftmittel (14) an der Zugvorrichtung (4a) kraftschlüssig anliegt.

8. Zugmitteltrieb nach Anspruch 7, dessen Spannvorrichtung (11a) eine Spannschiene (13) mit zwei zueinander beabstandeten Führungsrollen (15a, 15b) enthält, an denen die Zugvorrichtung (4a) geführt wird.

9. Zugmitteltrieb nach Anspruch 7, wobei die Spannschiene (13) der Spannvorrichtung (11a) Öffnungen aufweist, die eine Zirkulation des Ölnebels, insbesondere im Bereich der Führungsrollen (15a, 15b) gestatten.

10. Zugmitteltrieb nach Anspruch 1, dessen Spannvorrichtung (11a) als Kraftmittel (14) ein Gehäuse umfasst, in dem ein von einem Federmittel beaufschlagter, hydraulisch gedämpfter Kolben verschiebbar ist, der mittelbar oder unmittelbar mit einer Spannschiene (13) zusammenwirkt.

11. Zugmitteltrieb nach Anspruch 1, wobei der für den Zugmitteltrieb (1a, 1b) bestimmte Einbauraum (8) teilweise mit Öl befüllt ist und die Zugvorrichtung (4a, 4b) im Betriebszustand teilweise in ein Ölbad eintaucht ist bzw. in einem Ölbad umläuft.

12. Zugmitteltrieb nach Anspruch 1, mit einer Zugvorrichtung (4a, 4b), die aus einem ölresistenten Werkstoff, insbesondere einer elastomeren Materialmasse, oder aus Polyurethan hergestellt ist.

13. Zugmitteltrieb nach Anspruch 1, wobei die Zugvorrichtung, deren Breite "s" an die Spitzenkraft der Zugvorrichtung (4a, 4b) angepasst ist, als Armierung hochfeste Cord-Zugstränge (18) enthält.

14. Zugmitteltrieb nach Anspruch 1, der als ein Steuertrieb zum Antrieb mindestens einer Nockenwelle der Brennkraftmaschine (3) bestimmt ist und der einen Zahnriemen als Zugvorrichtung (4a, 4b) aufweist.

15. Zugmitteltrieb nach Anspruch 1, der zum Antrieb von Aggregaten der Brennkraftmaschine, wie Generator, Wasser-

**EP 1 756 449 B1**

pumpe, Lenkhilfspumpe oder Klimakompressor vorgesehen ist oder der zum Antrieb einer Ölpumpe oder von Ausgleichwellen der Brennkraftmaschine bestimmt ist.

**Revendications**

1. Mécanisme de traction destiné à entraîner au moins un arbre à cames ou au moins un ensemble d'un moteur à combustion interne (3), comprenant un dispositif de traction (4a, 4b) qui est conçu en tant que courroie sans fin et qui raccorde une roue entraînée (5) et au moins une roue d'entraînement (7a, 7b, 16a, 16b) et qui est précontraint par un dispositif tendeur (11a, 11b) le mécanisme de traction (1a, 1b)

   - étant arrangé dans un espace d'installation enfermé ou entouré (8), le dispositif de traction (4a, 4b) étant exposé à au moins un brouillard d'huile ;
   - et comportant le dispositif tendeur (11a, 11b) qui comporte de préférence un excentrique de travail (29) ou un rail tendeur (13) ;

   **caractérisé en ce que** le mécanisme de traction (1a, 1b)

   - a au moins une poulie à courroie de configuration non ronde ou une poulie à courroie dentée de configuration non ronde de la roue entraînée (5) ou de la roue d'entraînement (7a, 7b, 16a, 16b) ;
   - et pour lequel mécanisme de traction (1a, 1b) on prévoit un espace d'installation scellé (8) précédant le moteur à combustion interne (3) sur la face d'extrémité de ce dernier.

2. Mécanisme de traction selon la revendication 1, dans lequel la poulie à courroie ou la poulie à courroie dentée de configuration non ronde de la roue entraînée (5) ou de la roue d'entraînement (7a, 7b, 16a, 16b) est conçue sous forme d'ellipse ayant un rapport entre les axes "a" et "b" de ≥ 1,01:1.

3. Mécanisme de traction selon la revendication 1, présentant au moins une poulie à courroie ou une poulie à courroie dentée ayant une forme polygonale symétrique ou asymétrique et conçue pour être arrondie dans les zones de transition.

4. Mécanisme de traction selon la revendication 1, avec une fluctuation permissible ou une dispersion de force permissible d'une charge supérieure et d'une charge inférieure de la force de précontrainte du dispositif de traction (4a, 4b) par rapport à une valeur moyenne correspondant à ≥ 50%.

5. Mécanisme de traction selon la revendication 1, dans lequel la charge maximale se produisant est inférieure de ≥ 15% par comparaison avec un mécanisme de traction conventionnel d'un moteur à combustion interne, une largeur "s" adaptée pour la charge maximale réduite du dispositif de traction (4a, 4b) étant conçue pour être réduite de ≥ 18% par comparaison avec des dispositifs de traction antérieurs.

6. Mécanisme de traction selon la revendication 1, dans lequel le dispositif tendeur (11b) comprend un composant fixe qui est associé à un excentrique de travail (29) sur lequel agit un moyen de ressort (32) et qui est connecté à un rouleau tendeur (31).

7. Mécanisme de traction selon la revendication 1, dans lequel le dispositif tendeur (11a) comporte un rail tendeur qui peut pivoter par le biais d'un axe de rotation (12) et qui presse de manière non positive contre le dispositif de traction (4a) par le biais d'un moyen de force (14).

8. Mécanisme de traction selon la revendication 7, dans lequel le dispositif tendeur (11a) comporte un rail tendeur (13) avec deux rouleaux de guidage (15a, 15b) qui sont espacés l'un de l'autre et au niveau desquels le dispositif de traction (4a) est guidé.

9. Mécanisme de traction selon la revendication 7, dans lequel le rail tendeur (13) du dispositif tendeur (11a) a des orifices qui permettent une circulation du brouillard d'huile, en particulier dans la région des rouleaux de guidage (15a, 15b).

10. Mécanisme de traction selon la revendication 1, dans lequel le dispositif tendeur (11a) comprend en tant que moyen de force (14) un boîtier dans lequel peut être déplacé un piston à amortissement hydraulique sur lequel agit un

9

moyen de ressort et qui coopère indirectement ou directement avec un rail tendeur (13).

11. Mécanisme de traction selon la revendication 1, dans lequel l'espace d'installation (8) destiné pour le mécanisme de traction (1a, 1b) est partiellement rempli d'huile, et, dans l'état de fonctionnement, le dispositif de traction (4a, 4b) est partiellement immergé dans un bain d'huile ou tourne dans un bain d'huile.

12. Mécanisme de traction selon la revendication 1, comprenant un dispositif de traction (4a, 4b) qui est produit à partir d'un matériau résistant à l'huile, en particulier une masse de matériau élastomère, ou en polyuréthane.

13. Mécanisme de traction selon la revendication 1, dans lequel le dispositif de traction, dont la largeur "s" est adaptée à la force maximale dans le dispositif de traction (4a, 4b), comporte des cordons de traction de grande résistance (18) en tant que renforcement.

14. Mécanisme de traction selon la revendication 1, destiné à être utilisé comme entraînement de commande pour entraîner au moins un arbre à cames du moteur à combustion interne (3) et qui présente une courroie dentée en tant que dispositif de traction (4a, 4b).

15. Mécanisme de traction selon la revendication 1, qui est prévu pour entraîner des ensembles du moteur à combustion interne, comme l'alternateur, la pompe à eau, la pompe d'assistance à la direction, ou le compresseur de climatisation d'air, ou qui est prévu pour entraîner une pompe à huile ou pour équilibrer des arbres du moteur à combustion interne.

EP 1 756 449 B1

Fig. 1

Fig. 2

## Fig. 3

## Fig. 4

Fig. 5

Fig. 6

**EP 1 756 449 B1**

**REFERENCES CITED IN THE DESCRIPTION**

**Patent documents cited in the description**

- DE 4340865 A1
- DE 3434428 A1
- US 6000373 A1
- JP 3288047 A